# EUROPEAN PATENT APPLICATION

(11) **EP 4 432 388 A1**
(43) Date of publication of application: **18.09.2024**
(21) Application number: 21963695.8
(22) Date of filing: 15.11.2021
(51) Int. Cl.: H01M 4/13, H01M 4/139, H01M 10/0525

(54) **ELECTRODE AND FABRICATING METHOD THEREFOR, ELECTROCHEMICAL DEVICE, AND ELECTRONIC DEVICE**

(71) Applicant: Ningde Amperex Technology Limited, Ningde, Fujian 352100 (CN)
(72) Inventor: LIU, Mingju, Ningde, Fujian 352100 (CN); LI, Yajie, Ningde, Fujian 352100 (CN); ZHANG, Qingwen, Ningde, Fujian 352100 (CN)
(74) Representative: Icosa
(86) International application number: PCT/CN2021/130628
(87) International publication number: WO 2023/082248

(57) **Abstract**

This application provides an electrode and a preparation method thereof, an electrochemical apparatus, and an electronic apparatus. The electrode includes a current collector and an active material layer located on one side or two sides of the current collector; where along a thickness direction of the active material layer, the active material layer is divided into four portions, each portion is a detection region, the detection region is subjected to thermogravimetric analysis at a temperature rise rate of 10°C/min in an inert atmosphere, and results of the thermogravimetric analysis show that a weight loss mass percentage of the detection region at 200°C to 800°C gradually increases as a distance between the detection region and the current collector decreases in the thickness direction, which increases overall conductivity of the active material layer, thereby improving the overall conductivity of the electrode. This increases the thickness of the electrode, thereby increasing the capacity and energy density of electrochemical apparatuses using such electrode.

## Description

### TECHNICAL FIELD

This application relates to the field of electrochemical energy storage, and in particular to an electrode and a preparation method thereof, an electrochemical apparatus, and an electronic apparatus.

### BACKGROUND

Electrochemical apparatuses such as lithium-ion batteries have the advantages of high energy density, high power, and long cycle life, and are widely used in various fields. With the development of technologies, energy density of electrochemical apparatuses is increasingly required. To increase the energy density of electrochemical apparatuses, the capacity or voltage of active materials is increased in some technologies, while the percentages of active materials per unit volume are increased and the percentages of inactive materials are reduced in other technologies. Reducing a thickness of a current collector or separator, reducing a proportion of inactive materials in the formula, and preparing thicker electrodes can all reduce the proportion of inactive materials. However, in practical application, both the thickness of the current collector and the thickness of the separator have been reduced to close to the limit, so only a thickness of an electrode can be increased. However, excessive increase in the thickness of the electrode may affect the performance of electrochemical apparatuses, so it is impossible to significantly increase the thickness of the electrode. Therefore, how the thickness of the electrode is increased as much as possible to increase the capacity of the electrochemical apparatus while ensuring the performance of the electrochemical apparatus is an urgent problem to be solved.

### SUMMARY

Some embodiments of this application provide an electrode and a preparation method thereof, an electrochemical apparatus, and an electronic apparatus. A detection region is subjected to thermogravimetric analysis at a temperature rise rate of 10°C/min in an inert atmosphere, and results of the thermogravimetric analysis show that a weight loss mass percentage of the detection region at 200°C to 800°C gradually increases as a distance between the detection region and a current collector decreases in the thickness direction, such that conductivity of an active material layer can be improved, and a thickness of the active material layer can be increased, thereby increasing the energy density of the electrochemical apparatus.

Some embodiments of this application provide an electrode, where the electrode includes a current collector and an active material layer located on one side or two sides of the current collector; where along a thickness direction of the active material layer, the active material layer is divided into four portions, each portion is a detection region, the detection region is subjected to thermogravimetric analysis at a temperature rise rate of 10°C/min in an inert atmosphere, and results of the thermogravimetric analysis show that a weight loss mass percentage of the detection region at 200°C to 800°C gradually increases as a distance between the detection region and the current collector decreases in the thickness direction, which is conducive to improving the kinetics performance of the active material layer and in turn increasing the thickness of the electrode, thereby increasing the capacity and energy density of the electrochemical apparatus.

In some embodiments of this application, the active material layer is subjected to thermogravimetric analysis at a temperature rise rate of 10°C/min in an inert atmosphere, and the results of the thermogravimetric analysis show that the number of weight loss peaks of the active material layer is greater than or equal to 2 at 200°C to 800°C. This shows that there are at least two kinds of high molecular materials in the active material layer in these embodiments of this application.

In some embodiments of this application, the number of weight loss peaks of the active material layer is greater than or equal to 1 at 200°C to 350°C, and the number of weight loss peaks of the active material layer is greater than or equal to 1 at 350°C to 800°C. This shows that these embodiments of this application also have polymer compounds with different decomposition temperatures.

In some embodiments of this application, a weight loss mass percentage of the active material layer is M₁, and 0≤M₁≤2.2% at 200°C to 350°C; and in some embodiments, 0.1≤M₁≤1.5%. In some embodiments, a weight loss mass percentage of the active material layer is M₂, and 0≤M₂≤13% at 350°C to 800°C; and in some embodiments, 0.15≤M₂≤3.4%.

In some embodiments of this application, the electrode is a negative electrode. In some embodiments, a compacted density ρ of the active material layer is greater than or equal to 0.6 g/cm³. A higher compacted density contributes to increasing the energy that can be stored per unit volume of the electrochemical apparatus. In some embodiments, a thickness h of the active material layer on one side of the current collector is greater than or equal to 13 µm. A thicker thickness contributes to carrying more active materials, thereby increasing the energy density of the electrochemical apparatus. In some embodiments, a porosity n of the active material layer satisfies 35%≥n≥30%. Too small porosity leads to insufficient electrolyte infiltration; and too large porosity leads to a decrease in energy density. In some embodiments, the active material layer includes a negative electrode material, where the negative electrode material includes at least one of lithium titanate, silicon-based material, tin-based material, lithium metal material, or carbon material. In some embodiments, the negative electrode material includes silicon oxide, lithium titanate, graphite, silicon, or hard carbon.

In some embodiments, a compacted density ρ of the active material layer satisfies 1.85 g/cm³≥ρ≥0.75 g/cm³, and further 1.83 g/cm³≥ρ≥1.0 g/cm³, which contributes to increasing the energy density. In some embodiments, a thickness h of the active material layer on one side of the current collector satisfies 1500 µm≥h≥13 µm, and further 150 µm≥h≥40 µm, which contributes to increasing the energy density and prevents the negative electrode active material layer from falling off.

In some embodiments of this application, the active material layer includes a conductive agent, where based on a total mass of the active material layer, a mass percentage of the conductive agent in the active material layer is 0% to 2%. In some embodiments, a mass percentage of the conductive agent in each region of the active material layer gradually increases as a distance between each region and the current collector increases in the thickness direction, thereby improving the overall conductivity of the active material layer. In some embodiments, the conductive agent includes at least one of carbon nanotubes, carbon fiber, acetylene black, graphene, Ketjen black, or conductive carbon black.

In some embodiments of this application, the active material layer includes a polymer compound, where the polymer compound includes at least one of polyethylene oxide, polypropylene oxide, polyvinylidene fluoride, polytetrafluoroethylene, polyacrylonitrile, polyimide, polysiloxane, polyacrylic acid, polypropylene derivatives, sodium carboxymethyl cellulose, lithium carboxymethyl cellulose, polymethylpyrrolidone, polyvinylpyrrolidone, styrene acrylate, or styrene-butadiene rubber. In some embodiments, based on a total mass of the active material layer, a mass percentage of the polymer compound in the active material layer is 1.0% to 15.8%.

In some embodiments of this application, the active material layer includes a polymer compound, where based on a total mass of the active material layer, a mass percentage of the polymer compound in the active material layer is 1.6% to 7%.

Some embodiments of this application provide a preparation method of electrode, where the preparation method can be used for preparing any electrode in this application and includes: applying an active material layer slurry on at least one surface of a current collector, followed by drying and cold pressing to obtain an initial electrode; and carrying out treatment on the initial electrode to obtain the electrode; where the carrying out treatment on the initial electrode includes the following steps: carrying out plasma treatment on the initial electrode in a vacuum environment, where a gas source includes at least one of nitrogen, argon, or carbon tetrafluoride, a gas flow rate is 3000 sccm to 5000 sccm, a temperature is 20°C to 60°C, a plasma power is 3 kW to 5 kW, and a treatment time is 1 min to 1.2 min, or the plasma power is 0.5 kW to 3 kW, and the treatment time is 1 min to 1.2 min; or carrying out thermal treatment on the initial electrode in a vacuum or inert gas environment, where a thermal treatment temperature is higher than 200°C, and a thermal treatment time is 5 min to 15 min; or carrying out laser bombardment on the initial electrode in a vacuum or inert gas environment, where a laser intensity is 30 W to 100 W, and a treatment time is 0.3s to 0.5s.

In some embodiments, the carrying out treatment on the initial electrode includes: carrying out thermal treatment on the initial electrode in a vacuum or inert gas environment, where a thermal treatment temperature is 350°C to 400°C, and a thermal treatment time is 10 min to 15 min; or the thermal treatment temperature is 400°C to 500°C, and the thermal treatment time is 5 min to 10 min; or carrying out laser bombardment on the initial electrode in a vacuum or inert gas environment, where a laser intensity is 30 W to 70 W, and a treatment time is 0.5s; or the laser intensity is 70 W to 100 W, and the treatment time is 0.3s.

Some embodiments of this application provide an electrochemical apparatus including an electrode; where the electrode is the electrode according to any one of this application; or the electrode is an electrode prepared using the preparation method provided in this application.

Some embodiments of this application provide an electronic apparatus including the electrochemical apparatus provided in this application.

Some embodiments of this application provide an electrode. The electrode includes a current collector and an active material layer located on one side or two sides of the current collector; the active material layer is divided into four detection regions, the detection region is subjected to thermogravimetric analysis at a temperature rise rate of 10°C/min in an inert atmosphere, and results of the thermogravimetric analysis show that a weight loss mass percentage of the detection region at 200°C to 800°C gradually increases as a distance between the detection region and the current collector decreases in the thickness direction. In some embodiments of this application, a region of the active material layer close to a surface of the electrode has a low content of polymer compounds, which increases overall conductivity of the active material layer, thereby improving the overall conductivity of the electrode, increasing the thickness of the electrode, and increasing the capacity and energy density of electrochemical apparatuses using such electrode.

### BRIEF DESCRIPTION OF DRAWINGS

With reference to the accompanying drawings and the description of embodiments below, the above and other features, advantages, and aspects of some embodiments of this application will become more apparent. Throughout the drawings, the same or similar reference signs indicate the same or similar elements. It should be understood that the drawings are exemplary and that the components and elements are not necessarily drawn to scale.

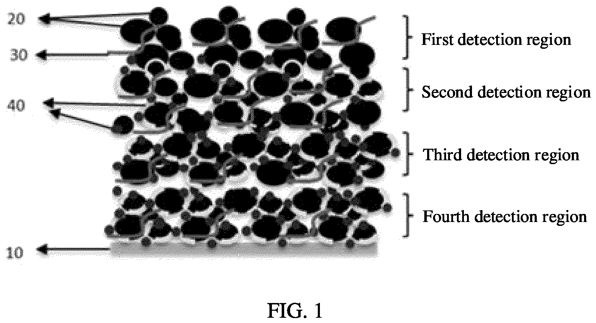

FIG. 1 is a schematic diagram of an electrode according to an embodiment of this application.

### DESCRIPTION OF EMBODIMENTS

The following embodiments may help persons skilled in the art to understand this application more comprehensively, but impose no limitation on this application in any manner.

To increase the energy density of the electrochemical apparatus, in some technologies, the energy density of the electrochemical apparatus is increased by increasing the thickness of the active material layer in the electrode. However, increasing the thickness of the active material layer in the electrode may deteriorate the conductivity of the active material layer due to the excessively thick active material layer. To improve the conductivity of the active material layer, in some technologies, the structure of multi-layer active material layer is used. However, the composite cold pressing process of multiple single-layer structures is complicated and impossible to avoid the change of the original compacted density and porosity of each single layer during the secondary cold pressing process. In addition, the joints between layers are prone to delamination due to weak bonding, which affects the conduction of electrons and ions and deteriorates the cycling performance. In some other technologies, laser is used to drill holes in the active material layers, but the efficiency of laser drilling is low, the cost is high, and the energy density is easily lost during the drilling process. In some other technologies, the pore-forming agent solution is applied on a surface of the electrode. However, this cannot avoid the dissolution of the surface of the electrode. In addition, the depths of pores formed by the pore-forming agent are limited, so improvement on the side close to the current collector is limited. The above mentioned technologies have solved the ion transport from the electrolyte to the surface of the active material in different ways, but the ion transport from the surface of the active material to the interior of the active material layer remains unchanged, and the hindrance of ion transport still exists, so the improvement effect is unsatisfactory.

Some embodiments of this application provide an electrode, so as to improve the conductivity of an active material layer of the electrode, thereby helping to increase the energy density of the electrochemical apparatus. Some embodiments provide an electrode. The electrode may be an electrode of the electrochemical apparatus, the electrode includes a current collector and an active material layer located on one side or two sides of the current collector, and the current collector may be a copper foil, an aluminum foil, a steel foil, or the like; where along a thickness direction of the active material layer, the active material layer is divided into four portions, each portion is a detection region, each detection region is subjected to thermogravimetric analysis at a temperature rise rate of 10°C/min in an inert atmosphere, and results of the thermogravimetric analysis show that a weight loss mass percentage of the detection region at 200°C to 800°C gradually increases as a distance between the detection region and the current collector decreases in the thickness direction.

In a conventional technology, a compacted density of an outer layer of an electrode after cold pressing is greater than that of an inner layer, and during the drying process of the active material layer, a binder and a conductive agent float up, which makes it difficult for the electrolyte to infiltrate. In addition, the binder envelops a surface of the active material, such that the ions transport from the electrolyte to the interior of the active material layer is blocked. Therefore, in some embodiments of this application, the results of the thermogravimetric analysis show that the weight loss mass percentage of the detection region at 200°C to 800°C gradually increases as the distance between the detection region and the current collector decreases in the thickness direction, that is, the weight loss mass percentage of each detection region changes with the distance between the detection region and the current collector. This indicates that the content of polymer compounds decreases gradually or gradiently along a direction away from the current collector. Reducing the content of polymer compounds on the surface of the active material layer close to the electrode can reduce the hindrance of the polymer compounds to ion transport and reduce the envelopment of the polymer compounds on the active material. By improving the distribution of the polymer compounds in the active material layer, the kinetics performance of the active material layer is improved, and thus the overall conductivity of the active material layer to ions and electrons is improved. In this way, when the thickness of the active material layer is increased to increase the energy density of the electrochemical apparatus, the active material layer has good conductivity, so the electricity of the electrochemical apparatus is not deteriorated due to the increase of the thickness of the active material layer.

In some embodiments of this application, the active material layer is subjected to thermogravimetric analysis at a temperature rise rate of 10°C/min in an inert atmosphere, and the results of the thermogravimetric analysis show that the number of weight loss peaks of the active material layer is greater than or equal to 2 at 200°C to 800°C. In some embodiments, the number of weight loss peaks greater than or equal to 2 indicates that there are at least two polymer compounds in the active material layer, which may be a binder and/or a thickener.

In some embodiments of this application, the number of weight loss peaks of the active material layer is greater than or equal to 1 at 200°C to 350°C, and the number of weight loss peaks of the active material layer is greater than or equal to 1 at 350°C to 800°C. This indicates that the active material layer in these embodiments of this application has a polymer compound with a low decomposition temperature and a polymer compound with a high decomposition temperature, where the low decomposition temperature may be 200°C to 350°C, and the high decomposition temperature may be 350°C to 800°C. The substance corresponding to the weight loss peak at 200°C to 350°C may be a thickener, and the substance corresponding to the weight loss peak at 350°C to 800°C may be a binder.

In some embodiments of this application, the weight loss mass percentage of the active material layer at 200°C to 350°C is M₁, 0≤M₁≤1.5%, further, 0.1≤M₁≤2.2%. In some embodiments, the weight loss mass percentage of the active material layer at 350°C to 800°C is M₂, 0≤M₂≤13%, further, 0.15≤M₂≤3.4%.

In some embodiments of this application, the electrode is a negative electrode, and the current collector may be a copper foil, an aluminum foil, a steel foil, or the like. A compacted density ρ of the active material layer is greater than or equal to 0.6 g/cm³. A higher compacted density indicates that a mass of the active material layer carried by the electrode per unit volume is high, and a higher mass of the negative electrode active material layer is better to increase the energy can be stored in the electrochemical apparatus per unit volume, thereby increasing the energy density. In some embodiments, the compacted density ρ of the active material layer satisfies 1.85 g/cm³≥ρ≥0.75 g/cm³, which is conducive to increasing the energy density of the electrochemical apparatus. In some embodiments, limiting the compacted density of the active material layer to not less than 0.75 g/cm³ can further guarantee the energy density of the electrochemical apparatus, while limiting the compacted density of the active material layer to not greater than 1.85 g/cm³can prevent the increase of the amount of the electrolyte consumed and the deterioration of cycling performance caused by crushing of particles in the active material layer due to excessive compacted density. Further, 1.83 g/cm³≥ρ≥1.0 g/cm³, the overall cycling performance and storage performance can be improved by further adjusting the compacted density.

In some embodiments of this application, a thickness h of the active material layer on one side of the current collector is greater than or equal to 13 µm, and in some embodiments, a thicker active material layer contributes to increasing the proportion of the active material layer in the electrochemical apparatus, thereby increasing the energy density of the electrochemical apparatus. In some embodiments of this application, a thickness h of the active material layer on one side of the current collector satisfies 1500 µm≥h≥13 µm. Limiting a minimum value of the thickness of the active material layer can guarantee the thickness of the active material layer, thereby increasing the overall energy density of the electrochemical apparatus. Limiting the thickness of the active material layer to not greater than 1500 µm can prevent the separation between the active material layer and the current collector that may occur due to the excessively thick active material layer. In some embodiments, 150 µm≥h≥40 µm, which further increases the energy density and the structural stability of the electrode plate.

In some embodiments of this application, a porosity n of the active material layer satisfies 35%≥n≥30%. Limiting the porosity of the active material layer to not lower than 30% can ensure that the active material layer is fully infiltrated by the electrolyte and sufficient transport channels can be provided. Limiting the porosity of the active material layer to not higher than 35% can prevent adverse effects on the volumetric energy density.

In some embodiments of this application, the active material layer includes a negative electrode material, where the negative electrode material includes at least one of lithium titanate, silicon-based material, tin-based material, lithium metal material, or carbon material, and optionally, the negative electrode material includes at least one of silicon oxide, lithium titanate, graphite, silicon, or hard carbon.

In some embodiments of this application, the active material layer includes a conductive agent, where based on a total mass of the active material layer, a mass percentage of the conductive agent in the active material layer is 0% to 2%, and the mass percentage of the conductive agent may be 0% or 2%. The conductive agent can improve the conductivity of the active material layer.

In some embodiments of this application, a mass percentage of the conductive agent in each region of the active material layer gradually increases as a distance between each region and the current collector increases in the thickness direction. In a conventional technology, after cold pressing of the electrode, a compacted density of a surface of an active material layer is greater than that of the interior of the active material layer, which makes it difficult for the electrolyte to infiltrate and difficult for the ions to enter from the surface, affecting the ion transport to the current collector. Considering the above problems, in some embodiments of this application, distribution of the conductive agent in the active material layer is increased and adjusted such that the mass percentage of the conductive agent gradually increases as the distance between each region and the current collector increases in the thickness direction, and ions can enter the interior of the active material layer from the surface of the active material layer, thereby improving electronic conduction of the active material layer and improving kinetics of the electrode.

In some embodiments of this application, the conductive agent includes at least one of carbon nanotubes, carbon fiber, acetylene black, graphene, Ketjen black, or conductive carbon black. The carbon nanotubes in the conductive agent may be single-walled carbon nanotubes or may be multi-walled carbon nanotubes, which can increase long-range electron conduction.

In some embodiments of this application, the active material layer includes a polymer compound, where the polymer compound includes at least one of polyethylene oxide, polypropylene oxide, polyvinylidene fluoride, polytetrafluoroethylene, polyacrylonitrile, polyimide, polysiloxane, polyacrylic acid, polypropylene derivatives, sodium carboxymethyl cellulose, lithium carboxymethyl cellulose, polymethylpyrrolidone, polyvinylpyrrolidone, styrene acrylate, or styrene-butadiene rubber.

In some embodiments of this application, a mass percentage of the polymer compound in the active material layer is 1.0% to 15.8%. Too low mass percentage of the polymer compound may lead to insufficient adhesion between the active material layer and the current collector, while too high mass percentage of the adhesion may affect the conductivity of the active material layer. In some embodiments the mass percentage of the polymer compound in the active material layer is 1.6% to 7%.

In some embodiments of this application, the polymer compound is distributed point-like or planar-like on the surface of an active material (for example, negative electrode material) of the active material layer, and is accumulated on the surface of the active material or between particles of the active material. In this way, more active material is exposed, and a coating area of the polymer compound on the active material is reduced, which reduces the hindrance to the electron and ion transport and improves the kinetics performance.

In some embodiments of this application, the number of weight loss peaks at 200°C to 800°C in the detection region farthest from the current collector in the thickness direction is zero. In some embodiments, the surface of the active material layer far from the current collector does not contain the polymer compound (for example, binder and/or thickener), improving the kinetics performance of the surface of the active material layer, increasing the contact area with the electrolyte, and facilitating infiltration of the electrolyte into the interior of the active material layer.

In some embodiments of this application, referring to FIG. 1, the electrode includes a current collector 10 and an active material layer. The active material layer includes an active material 20, a conductive agent 30, and a binder 40, where the active material 20 may include a first active material and a second active material, and a particle size of the first active material is larger than that of the second active material, such that a gap is fully filled through combination of active materials with different particle sizes. The binder 40 may include a first binder and a second binder. The first binder may be in the form of dots, and the second binder may be in the form of chains. The first binder and the second binder each may be independently selected from styrene acrylate and lithium carboxymethyl cellulose, and the active material layer may be divided into a plurality of detection regions along the thickness direction, where there may be no binder in the detection region farthest from the current collector along the thickness direction.

Some embodiments of this application provide a preparation method of electrode, where the preparation method can be used for preparing any electrode in this application and includes: applying an active material layer slurry on at least one surface of a current collector, followed by drying and cold pressing to obtain an initial electrode; and carrying out treatment on the initial electrode to obtain the electrode; where the carrying out treatment on the initial electrode includes the following steps: carrying out plasma treatment on the initial electrode in a vacuum environment, where a gas source includes at least one of nitrogen, argon, or carbon tetrafluoride, a gas flow rate is 3000 sccm to 5000 sccm, a temperature is 20°C to 60°C, a plasma power is 3 kW to 5 kW, and a treatment time is 1 min to 1.2 min, or the plasma power is 0.5 kW to 3 kW, and the treatment time is 1 min to 1.2 min; or carrying out thermal treatment on the initial electrode in a vacuum or inert gas environment, where a thermal treatment temperature is higher than 200°C, and a thermal treatment time is 5 min to 15 min; or carrying out laser bombardment on the initial electrode in a vacuum or inert gas environment, where a laser intensity is 30 W to 100 W, and a treatment time is 0.3s to 0.5s.

In some embodiments of this application, the carrying out treatment on the initial electrode may further include: carrying out thermal treatment on the initial electrode in a vacuum or inert gas environment, where a thermal treatment temperature is 350°C to 400°C, and a thermal treatment time is 10 min to 15 min; or the thermal treatment temperature is 400°C to 500°C, and the thermal treatment time is 5 min to 10 min; or carrying out laser bombardment on the initial electrode in a vacuum or inert gas environment, where a laser intensity is 30 W to 70 W, and a treatment time is 0.5s; or the laser intensity is 70 W to 100 W, and the treatment time is 0.3s.

Some embodiments of this application further provide another preparation method of electrode. On at least one side of a current collector, slurry 1 to slurry n are sequentially coated on the current collector in a multi-layer coating manner to produce an active material layer with a plurality of sublayers, and such active material layer is subjected to thermogravimetric analysis at a temperature rise rate of 10°C/min in an inert atmosphere. Results of the thermogravimetric analysis show that a weight loss mass percentage of each sublayer of the active material layer at 200°C to 800°C gradually increases as a distance between the sublayer and the current collector decreases in the thickness direction.

Some embodiments of this application provide an electrochemical apparatus including an electrode; where the electrode is the electrode according to any one of this application; or the electrode is an electrode prepared using the preparation method provided in this application.

In some embodiments of this application, the electrochemical apparatus includes a positive electrode, a negative electrode, and a separator arranged between the positive electrode and the negative electrode. In some embodiments, both the negative electrode and the positive electrode may be any of the electrodes mentioned above. In some embodiments, a current collector of the positive electrode may use an Al foil, or certainly may use other current collectors commonly used in the art.

In some embodiments, the separator includes at least one of polyethylene, polypropylene, polyvinylidene fluoride, polyethylene terephthalate, polyimide, or aramid. For example, polyethylene is selected from at least one of high-density polyethylene, low-density polyethylene, or ultra-high molecular weight polyethylene. Especially, polyethylene and polypropylene have a good effect on preventing short circuits, and can improve stability of a battery through a shutdown effect. In some embodiments, a thickness of the separator ranges from approximately 5 µm to 50 µm.

In some embodiments, a surface of the separator may further include a porous layer. The porous layer is disposed on at least one surface of the separator. The porous layer includes inorganic particles and a binder. The inorganic particles are selected from at least one of aluminum oxide (Al₂O₃), silicon oxide (SiO₂), magnesium oxide (MgO), titanium oxide (TiO₂), hafnium dioxide (HfO₂), tin oxide (SnO₂), cerium dioxide (CeO₂), nickel oxide (NiO), zinc oxide (ZnO), calcium oxide (CaO), zirconia oxide (ZrO₂), yttrium oxide (Y₂O₃), silicon carbide (SiC), boehmite, aluminum hydroxide, magnesium hydroxide, calcium hydroxide, or barium sulfate. In some embodiments, a pore diameter of the separator ranges from approximately 0.01 µm to 1 µm. The binder of the porous layer is selected from at least one of polyvinylidene fluoride, vinylidene fluoride-hexafluoropropylene copolymer, polyamide, polyacrylonitrile, polyacrylate ester, polyacrylic acid, polyacrylate salt, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrochemical apparatus may be a winding type or stacking type electrochemical apparatus. In some embodiments, the positive electrode and/or negative electrode of the electrochemical apparatus may be a multi-layer structure formed through winding or stacking, or may be a single-layer structure in which a single-layer positive electrode, a separator, and a single-layer negative electrode are stacked.

In some embodiments, the electrochemical apparatus includes a lithium-ion battery but this application is not limited thereto. In some embodiments, the electrochemical apparatus may further include an electrolyte. The electrolyte may be one or more of gel electrolyte, solid electrolyte, and liquid electrolyte, and the liquid electrolyte includes a lithium salt and a non-aqueous solvent. The lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. For example, LiPF₆ is selected as the lithium salt because it has a high ionic conductivity and can improve cycling performance.

The non-aqueous solvent may be a carbonate compound, a carboxylate compound, an ether compound, another organic solvent, or a combination thereof. The carbonate compound may be a linear carbonate compound, a cyclic carbonate compound, a fluorocarbonate compound, or a combination thereof.

An example of the linear carbonate compound is diethyl carbonate (DEC), dimethyl carbonate (DMC), dipropyl carbonate (DPC), methyl propyl carbonate (MPC), ethyl propyl carbonate (EPC), methyl ethyl carbonate (MEC), and a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An example of the carboxylate compound is methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, methyl formate, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

In some embodiments of this application, a lithium-ion battery is used as an example. A positive electrode, a separator, and a negative electrode are wound or stacked in sequence to form an electrode assembly, and the electrode assembly is then packaged in an aluminum-plastic film, followed by injection of an electrolyte, formation, and packaging, such that the lithium-ion battery is prepared. Then, a performance test is performed on the prepared lithium-ion battery.

Persons skilled in the art will understand that the method for preparing the electrochemical apparatus (for example, the lithium-ion battery) described above is only an example. Without departing from the content disclosed in this application, other methods commonly used in the art may be used.

This application provides an electronic apparatus including an electrochemical apparatus. The electrochemical apparatus is the electrochemical apparatus according to any one of this application. The electronic apparatus in these embodiments of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, an unmanned aerial vehicle, a lighting appliance, a toy, a game console, a clock, an electric tool, a flash lamp, a camera, or a large household battery.

Some specific examples and comparative examples are listed below to better illustrate this application. Lithium-ion batteries are used as examples. In the specific examples and comparative examples, the active material layer of the electrode is divided into four detection regions along the thickness direction, a thickness of each detection region is 1/4 of the total thickness of the active material layer, and distances between the first detection region, the second detection region, the third detection region, and the fourth detection region and the current collector in the thickness direction gradually decrease. However, in this application, the thicknesses of the active material layers corresponding to the four detection regions may be the same or different.

### Example 1

Preparation of positive electrode plate: A positive electrode material lithium cobaltate, a polymer compound polyvinylidene fluoride, and a conductive agent conductive carbon black were mixed at a mass ratio of 97.5:1.5:1, N-methylpyrrolidone (NMP) was used as a solvent, and the mixture was uniformly stirred to prepare a positive electrode active material layer slurry. The slurry was uniformly applied on a positive electrode current collector aluminum foil for drying and cold pressing to obtain a positive electrode plate.

Preparation of negative electrode plate: A negative electrode material graphite, a polymer compound (styrene acrylate and lithium carboxymethyl cellulose), and a conductive agent carbon nanotubes were mixed at a mass ratio of 97:0.5:0.5:2, and deionized water was used as a solvent to prepare a negative electrode active material layer slurry. Copper foil was used as a negative electrode current collector, and the negative electrode active material layer slurry was applied on the negative electrode current collector for drying at 90°C. The dried electrode plate was subjected to thermal treatment, where a thermal treatment temperature was 400°C to 500°C, and a thermal treatment time could be 5 min to 10 min. After the thermal treatment, a negative electrode plate was obtained.

Preparation of separator: The separator was an 8 µm thick polyethylene (PE).

Preparation of electrolyte: In an environment with a water content less than 10 ppm, lithium hexafluorophosphate and a non-aqueous organic solvent (a weight ratio of ethylene carbonate (EC), diethyl carbonate (DEC), propylene carbonate (PC), propyl propionate (PP), and vinylene carbonate (VC) was equal to 20:30:20:28:2) were mixed at a weight ratio of 8:92 to prepare an electrolyte.

Preparation of lithium-ion battery: The positive electrode plate, the separator, and the negative electrode plate were stacked in sequence, such that the separator was sandwiched between the positive electrode plate and the negative electrode plate for separation, and the stack was wound to obtain an electrode assembly. The electrode assembly was placed in an outer package aluminum-plastic film, and was dehydrated at 80°C, then the above-mentioned electrolyte was injected and packaging was performed, followed by processes such as formation, degassing, and cutting to obtain a lithium-ion battery.

Relevant parameters of Example 1 were as follows: A compacted density of the negative electrode active material layer was 1.75 g/cm³; a thickness of the active material layer on one side of the current collector of the negative electrode was 80 µm; a porosity of the negative electrode active material layer was 32%; the negative electrode material was graphite; the conductive agent of the negative electrode was carbon nanotubes; the polymer compound of the negative electrode was a mixture of styrene acrylate and lithium carboxymethyl cellulose at a mass ratio of 1:1; a mass percentage of the polymer compound in the negative electrode active material layer was 1%; four detection regions with a thickness of 20 µm included in the negative electrode active material layer in a thickness direction from the side far away from the current collector to the side close to the current collector were the first detection region, the second detection region, the third detection region, and the fourth detection region in turn; a mass content of the conductive agent in the first detection region was 2.02%, a mass content of the conductive agent in the second detection region was 2.012%, a mass content of the conductive agent in the third detection region was 2.006%, and a mass content of the conductive agent in the fourth detection region was 2%; the thermogravimetric analysis at 200°C to 800°C shown that a thermogravimetric change of the first detection region was 0% at 200°C to 350°C, a thermogravimetric change of the first detection region was 0% from 350°C to 800°C, a thermogravimetric change of the second detection region was 0.13% from 200°C to 350°C, a thermogravimetric change of the second detection region was 0.19% from 350°C to 800°C, a thermogravimetric change of the third detection region was 0.22% from 200°C to 350°C, a thermogravimetric change of the third detection region was 0.34% from 350°C to 800°C, a thermogravimetric change of the fourth detection region was 0.32% at 200°C to 350°C, and a thermogravimetric change of the fourth detection region was 0.49% at 350°C to 800°C; and the number of thermogravimetric weight loss peaks of the negative electrode active material layer was 1 at 200°C to 350°C, the number of thermogravimetric weight loss peaks was 1 at 350°C to 800°C, and the number of thermogravimetric weight loss peaks was 2 at 200°C to 800°C.

For other examples, parameters were changed based on steps in Example 1. Specific changed parameters are shown in the tables below.

The differences between Comparative Examples 1 to 3 and Example 1 are shown in the table below, and the negative electrode active material layers were not treated in all comparative examples.

Test methods of this application are described below.

### 1. Thermogravimetric test

The atmosphere of thermogravimetric analysis was nitrogen, and the temperature rise rate was 10°C/min. The active material layer was divided into four portions along the thickness direction, and each portion was a detection region. After the active material layer in the corresponding detection region was mechanically peeled off, the thermogravimetric test was carried out, where the test temperature ranged from 200°C to 350°C and from 350°C to 800°C.

### 2. Resistivity test

The resistivity of the active material layer was tested using a resistance tester, and the electrode plate was directly measured using the upper and lower plane controllable pressure probes. An alternating current was loaded to the positive electrode plate or negative electrode plate under test, a certain pressure (0.35 tons) was applied to the active material layer under test to obtain the overall resistance of the electrode plate in the thickness direction; and an area (A) and a thickness (l) of the electrode plate under test were collected, and the resistivity of the electrode plate under test was derived according to the resistivity calculation formula: (ρ=R×A/l).

### 3. Alternating current resistance test

A small alternating current of 1 KHz was loaded to the positive and negative electrodes of the battery, and the alternating current resistance value of the battery was obtained by measuring its voltage response.

### 4. DCR test of direct current resistance at 25°C

At 25°C, the lithium-ion battery was charged to 4.45 V at a constant current of 0.5C, then charged to 0.05C at a constant voltage, and left standing for 30 min; and the lithium-ion battery was discharged at 0.1C for 3h until the state of charge of the battery was 70% SOC (the voltage value U1 corresponding to discharge end was recorded), and discharged at 1C for 1s (the voltage value U2 corresponding to discharge end was recorded). "1C" refers to a current at which a capacity of a battery is fully discharged in one hour. The DCR of the battery at 70% SOC was calculated according to the following formula: DCR=(U1-U2)/(1C-0.1C).

### 5. Rate performance test

In an environment of 25°C, the battery was discharged to 3 V at a constant current for charge and discharge for the first time. The battery was charged at a constant current of 0.7C until the upper limit voltage was 4.48 V, charged at a constant voltage to 0.05C, and then discharged at a constant current of 0.2C until the final voltage was 3 V. At this point, the discharge capacity at 0.2C was recorded. The battery was charged at a charge current of 0.7C repeatedly until the upper limit voltage was 4.48 V, charged to 0.05C at a constant voltage, and then constant current discharged at a discharge rate of 3C until the final voltage was 3 V At this point, the discharge capacity at 3C was recorded. Discharge capacity retention rate at 3C=(discharge at 3C/discharge capacity at 0.2C)×100%.

**Table 1**

| | Percentage of conductive agent in first detection region (%wt) | Percentage of conductive agent in second detection region (%wt) | Percentage of conductive agent in third detection region (%wt) | Percentage of conductive agent in fourth detection region (%wt) | Formula of negative electrode active material layer slurry | Total mass percentage of polymer compounds (%wt) | Negative electrode active material layer Treatment process |
|---|---|---|---|---|---|---|---|
| Example 1 | 2.02 | 2.012 | 2.006 | 2 | Graphite:styrene acrylate:lithium carboxymethyl | 1 | Thermal treatment: temperature: 400°C to 500°C, time: 5 min to 10 min |
| | | | | | cellulose:CNT=97.0%:0.5%:0.5%:2% | | |
| Example 2 | 1.013 | 1.01 | 1.004 | 1 | Graphite:styrene acrylate:lithium carboxymethyl | 1.6 | Laser bombardment: power: 70 W to 100 W, time: 0.3s |
| | | | | | cellulose:CNT=97.4%:0.8%:0.8%:1% | | |
| Example 3 | 1.02 | 1.016 | 1.008 | 1 | Graphite:styrene acrylate:lithium carboxymethyl | 2.7 | Thermal treatment: temperature: 400°C to 500°C, time: 5 min to 10 min |
| | | | | | cellulose:CNT=96.3%: 1.5%: 1.2%: 1% | | |
| Example 4 | 1.06 | 1.04 | 1.02 | 1 | Graphite:styrene acrylate:lithium carboxymethyl | 7 | Plasma treatment: plasma power: 3 kW to 5 kW, time: 1 min to 1.2 min |
| | | | | | cellulose:CNT=92.0%:3.5%:3.5%:1% | | |
| Example 5 | 0 | 0 | 0 | 0 | Graphite:styrene acrylate:lithium carboxymethyl | 15.8 | Thermal treatment: temperature: 350°C to 400°C, time: 10 min to 15 min |
| | | | | | cellulose:CNT=84.2%:13.4%:2.4%:0 | | |
| Example 6 | 1.02 | 1.02 | 1.01 | 1 | The fourth layer (graphite:styrene acrylate:lithium carboxymethyl | 2.7 | Without thermal treatment, it was prepared by multi-layer coating; the distance to the current collector gradually decreased from the first layer to the fourth layer; and the fourth layer was closest to the current collector |
| | | | | | cellulose:CNT=96.3%:1.5%:1.2%:1%), the third layer (graphite:styrene acrylate:lithium carboxymethyl | | |
| | | | | | cellulose:CNT=97.11%: 1,05%:0.84%: 1%), the second layer (graphite:styrene acrylate:lithium carboxymethyl | | |
| | | | | | cellulose:CNT=97.92%:0.6%:0.48%:1 %), and the first layer (graphite:styrene | | |
| | | | | | acrylate:lithium carboxymethyl cellulose:CNT=98.46%:0.3%:0.24%:1%) | | |
| Example 7 | 1.02 | 1.016 | 1.008 | 1 | Graphite:polyacrylate ester:lithium carboxymethyl | 2.7 | Temperature: 400°C to 500°C, time: 5 min to 10 min |
| | | | | | cellulose:CNT=96.3%: 1.5%: 1.2%: 1% | | |
| Example 8 | 1.02 | 1.016 | 1.008 | 1 | Graphite:lithium carboxymethyl | 2.7 | Temperature: 400°C to 500°C, time: 5 min to 10 min |
| | | | | | cellulose:CNT=96.3%:2.7%:1 %. | | |
| Comparative Example 1 | 0 | 0 | 0 | 0 | Graphite:styrene acrylate:lithium carboxymethyl | 15.8 | No treating |
| | | | | | cellulose:CNT=84.2%:13.4%:2.4%:0 | | |
| Comparative Example 2 | 0 | 0 | 0 | 0 | Graphite:styrene acrylate:lithium carboxymethyl | 3.6 | No treating |
| | | | | | cellulose:CNT=96.4%:2%:1.6%:0 | | |
| Comparative Example 3 | 0 | 0 | 0 | 0 | Graphite:styrene acrylate:lithium carboxymethyl | 1.8 | No treating |
| | | | | | cellulose:CNT=98.0%:1.2%:0.8%:0 | | |

**Table 2**

| | Mass change of first detection region at 200°C to 350°C (%) | Mass change of first detection region at 350°C to 800°C (%) | Mass change of second detection region at 200°C to 350°C (%) | Mass change of second detection region at 350°C to 800°C (%) | Mass change of third detection region at 200°C to 350°C (%) | Mass change of third detection region at 350°C to 800°C (%) | Mass change of fourth detection region at 200°C to 350°C (%) | Mass change of fourth detection region at 350°C to 800°C (%) | Alternatin g current resistance (Ω) | Direct current resistance (mΩ) | Discharge capacity retention rate at 3C (%) |
|---|---|---|---|---|---|---|---|---|---|---|---|
| Example 1 | 0 | 0 | 0.13 | 0.19 | 0.22 | 0.34 | 0.32 | 0.49 | 12 | 31 | 85 |
| Example 2 | 0.10 | 0.15 | 0.20 | 0.31 | 0.36 | 0.54 | 0.51 | 0.77 | 15 | 34 | 79 |
| Example 3 | 0.15 | 0.29 | 0.31 | 0.58 | 0.54 | 1.02 | 0.77 | 1.46 | 19 | 36.2 | 72.9 |
| Example 4 | 0.44 | 0.68 | 0.88 | 1.36 | 1.54 | 2.38 | 2.2 | 3.4 | 21 | 39 | 70 |
| Example 5 | 0.3 | 2.6 | 0.6 | 5.2 | 1.05 | 9.1 | 1.5 | 13 | 36 | 49 | 59 |
| Example 6 | 0.15 | 0.29 | 0.31 | 0.58 | 0.54 | 1.02 | 0.77 | 1.46 | 20 | 37 | 71 |
| Example 7 | 0.15 | 0.15 | 0.31 | 0.30 | 0.54 | 0.53 | 0.77 | 0.75 | 23 | 42 | 68 |
| Example 8 | 0.35 | 0.00 | 0.70 | 0.00 | 1.20 | 0.00 | 1.73 | 0 | 21 | 40 | 70 |
| Comparative Example 1 | 1.5 | 13 | 1.5 | 13 | 1.5 | 13 | 1.5 | 13 | 70 | 85 | 30 |
| Comparative Example 2 | 1 | 1.9 | 1 | 1.9 | 1 | 1.9 | 1 | 1.9 | 56 | 71 | 41 |
| Comparative Example 3 | 0.51 | 1.16 | 0.51 | 1.16 | 0.51 | 1.16 | 0.51 | 1.16 | 45 | 60 | 45 |

| | | | | | | | | | | | |
|---|---|---|---|---|---|---|---|---|---|---|---|
| Note: CNT is carbon nanotubes. The preparation parameters of Examples 1 to 8 and Comparative Examples 1 to 3 are shown in Table 1, and the performance test results are shown in Table 2. The active material layer in the table of this application is an active material layer of a negative electrode. Parameters not shown in the examples and comparative examples in Table 1 are the same as those in Example 1. The number of thermogravimetric weight loss peaks of the active material layers in the examples and comparative examples in Table 1 is 1 at 200°C to 350°C, 1 at 350°C to 800°C, and 2 at 200°C to 800°C. | | | | | | | | | | | |

As shown in Table 2, in Examples 1 to 8, the weight loss mass percentages of the detection regions at 200°C to 350°C and at 350°C to 800°C gradually increase as the distances between the detection regions and the current collector decrease in the thickness direction. In Comparative Examples 1 to 3, the weight loss mass percentages of the detection regions at 200°C to 350°C and 350°C to 800°C remain unchanged with the distances between the detection regions and the current collector in the thickness direction. The alternating current resistances and direct current resistances of Examples 1 to 8 are obviously smaller than those of Comparative Examples 1 to 3, and the discharge capacity retention rates at 3C of Examples 1 to 8 are higher than those of Comparative Examples 1 to 3. Therefore, when the weight loss mass percentages of the detection regions of the active material layer at 200°C to 800°C gradually increase as the distances between the detection regions and the current collector decrease in the thickness direction, the kinetics performance of the lithium-ion battery can be improved, the rate discharge performance of the lithium-ion battery can be improved, and the energy density of the lithium-ion battery can be increased.

Still referring to Table 1 and Table 2, it can be learned from Examples 1 to 8 that the lithium-ion batteries have good conductivity and rate performance when the mass changes of the detection regions are 0% to 1.5% at 200°C to 350°C and 0% to 13% at 350°C to 800°C, which may be because the mass changes in the process of the thermogravimetric analysis are related to the percentages of high molecular materials. A greater mass change indicates a higher percentage of the high molecular material. Therefore, when the mass changes in the process of the thermogravimetric analysis are small, it shows that the active material layer contains less high molecular materials, which is conducive to improving ion and electron conduction and kinetics performance.

It can be further learned from Table 1 and Table 2 that better results can be achieved when thermal treatment, laser bombardment, or plasma treatment is carried out on the negative electrode active material layer. Regardless of whether thermal treatment or multi-layer coating is adopted, as long as the weight loss mass percentages of the detection regions increase gradually at 200°C to 800°C with the direction close to the current collector, the effects of improving the kinetics performance and cycling performance can be achieved in this application.

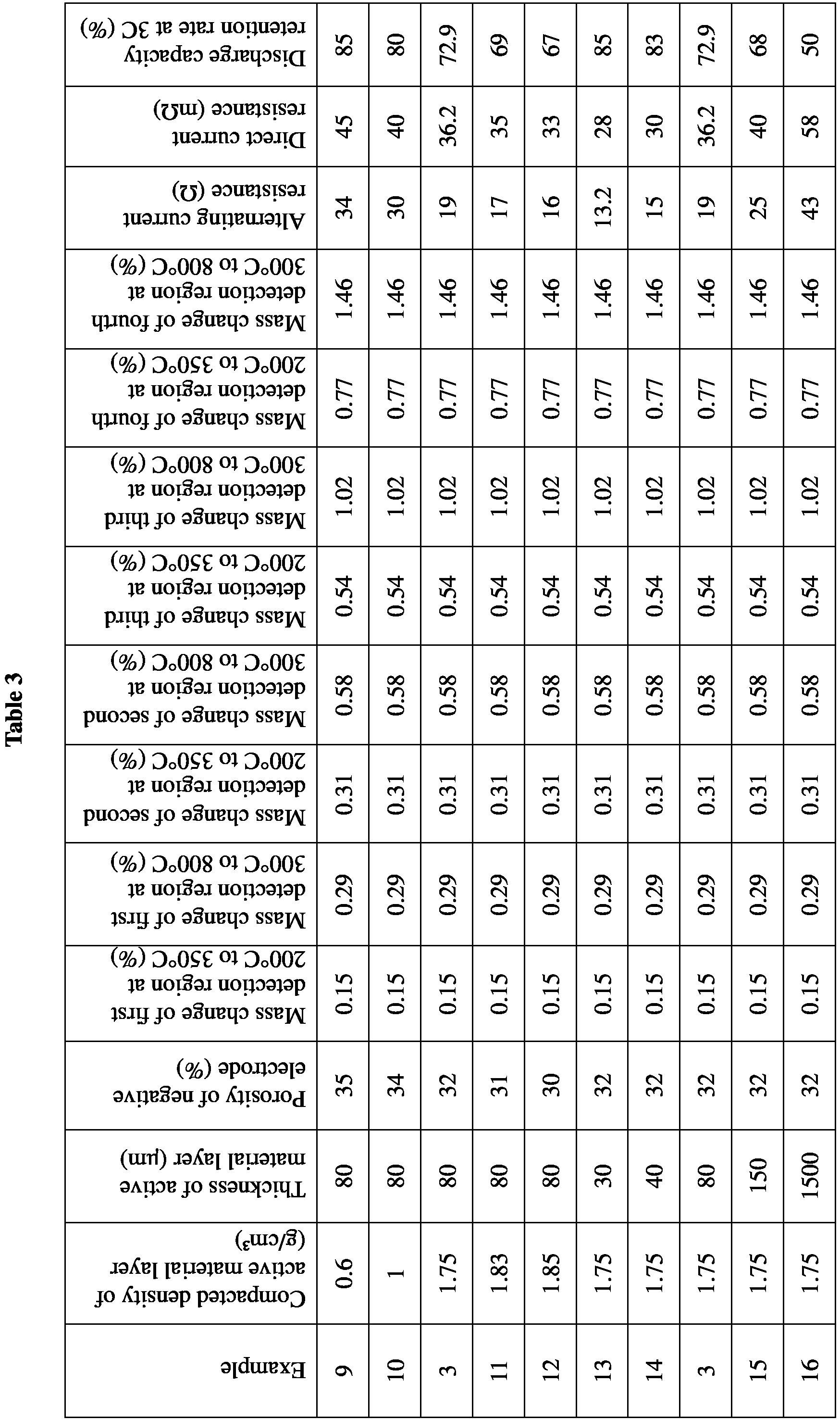

The preparation parameters and test results of Examples 9 to 16 and Example 3 are shown in Table 3. The only difference between Examples 9 to 16 and Example 3 lies in the data shown in Table 3, and the remaining data not shown is the same.

It can be learned from Examples 9 to 12 and Example 3 that as the compacted density of the negative electrode active material layer increases, the porosity of the negative electrode correspondingly decreases, and the direct current resistance and alternating current resistance gradually decrease, but the discharge capacity retention rate at 3C also decreases, which may be because the decrease of porosity shortens the ion transport path. However, the increase of the compacted density leads to the crushing of the particles of the negative electrode material, and the decrease of the particle size of the negative electrode material, which leads to the decrease of the cycling performance. However, if the compacted density is too small, the volumetric energy density of the negative electrode will be insufficient.

It can be learned from Examples 13 to 16 and Example 3 that as the thickness of the negative electrode active material layer increases, the alternating current resistance and direct current resistance increase, and the discharge capacity retention rate at 3C decreases. This is because the increase of the thickness of the negative electrode active material layer leads to the increase of ion transport path, and further leads to an increase in a resistance, thereby deteriorating kinetics performance. However, if the thickness of the negative electrode active material layer is too small, energy stored in the negative electrode may be too small, and consequently, a capacity of the lithium-ion battery is insufficient.

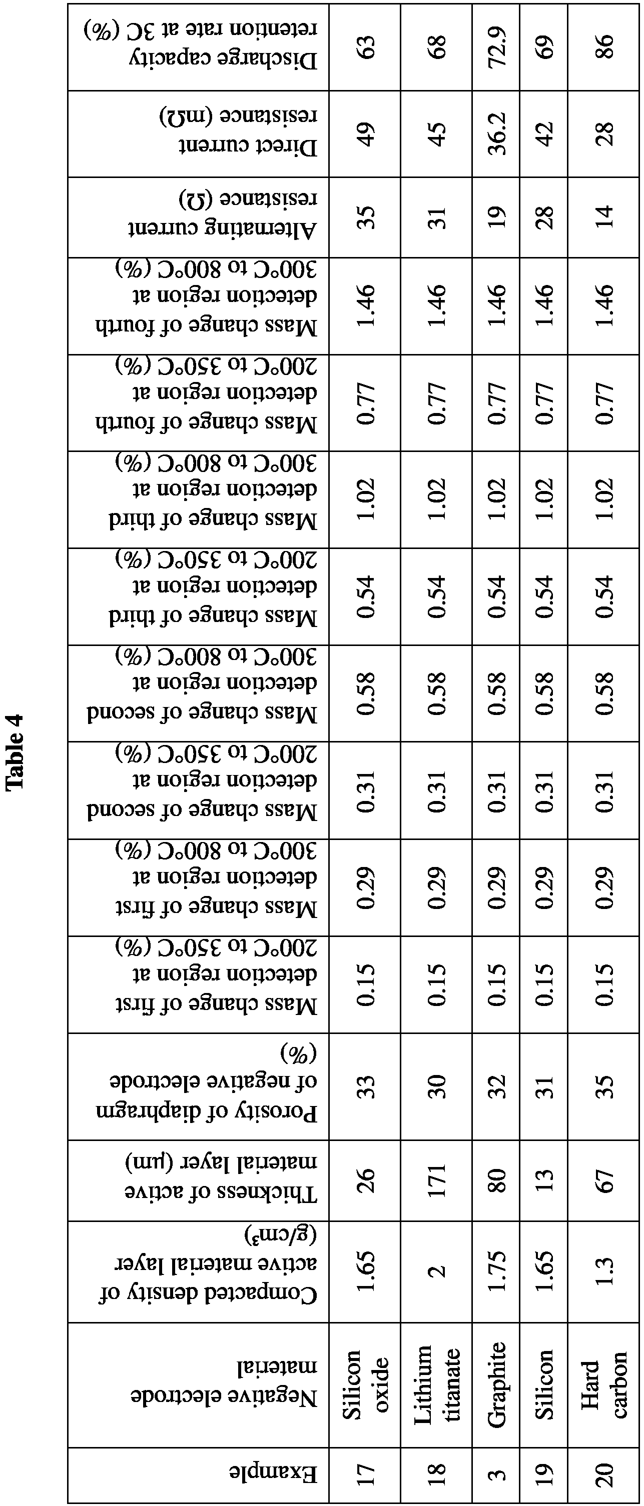

The preparation parameters and performance test results of Examples 17 to 20 and Example 3 are shown in Table 4, and the remaining parameters not shown in Examples 17 to 20 are the same as those in Example 3.

As shown in Table 4, when silicon oxide, lithium titanate, graphite, silicon, or hard carbon are selected as negative electrode materials, they all have lower alternating current resistance and direct current resistance and higher discharge capacity retention rate at 3C. When the negative electrode material is graphite or hard carbon, the performance is the best.

**Table 5**

| Example | Conductive agent | Mass change of first detection region at 200°C to 350°C (%) | Mass change of first detection region at 300°C to 800°C (%) | Mass change of second detection region at 200°C to 350°C (%) | Mass change of second detection region at 300°C to 800°C (%) | Mass change of third detection region at 200°C to 350°C (%) | Mass change of third detection region at 300°C to 800°C (%) | Mass change of fourth detection region at 200°C to 350°C (%) | Mass change of fourth detection region at 300°C to 800°C (%) | Alternating current resistance (Ω) | Direct current resistance (mΩ) | Discharge capacity retention rate at 3C (%) |
|---|---|---|---|---|---|---|---|---|---|---|---|---|
| 21 | Conductive carbon black | 0.15 | 0.29 | 0.31 | 0.58 | 0.54 | 1.02 | 0.77 | 1.46 | 35 | 47 | 61 |
| 22 | Acetylene black | 0.15 | 0.29 | 0.31 | 0.58 | 0.54 | 1.02 | 0.77 | 1.46 | 27 | 41 | 68 |
| 23 | Ketjen black | 0.15 | 0.29 | 0.31 | 0.58 | 0.54 | 1.02 | 0.77 | 1.46 | 20 | 37 | 72 |
| 3 | CNT | 0.15 | 0.29 | 0.31 | 0.58 | 0.54 | 1.02 | 0.77 | 1.46 | 19 | 36.2 | 72.9 |
| 24 | Graphene | 0.15 | 0.29 | 0.31 | 0.58 | 0.54 | 1.02 | 0.77 | 1.46 | 18 | 34 | 75 |
| 25 | Carbon fiber | 0.15 | 0.29 | 0.31 | 0.58 | 0.54 | 1.02 | 0.77 | 1.46 | 22 | 39 | 70 |

The only difference between parameters of Examples 21 to 25 and parameters of Example 3 lies in the data shown in Table 5. The remaining parameters not shown in Examples 21 to 25 are the same as those in Example 3. In Table 5, the active material layer is a negative electrode active material layer.

As shown in Examples 39 to 44, when the conductive agent is conductive carbon black, acetylene black, Ketjen black, carbon nanotubes, graphene, or carbon fiber, the performance of the lithium-ion batteries is good. When the conductive agent is carbon nanotubes or graphene, the alternating current resistance and direct current resistance are low, and the discharge capacity retention rate at 3C is the highest. This may be because the carbon nanotubes increase the long-range conductivity, while the graphene can well fill the gaps between negative electrode materials, thereby improving the conductivity.

The foregoing descriptions are only preferred examples of this application and explanations of the applied technical principles. Persons skilled in the art should understand that the scope of disclosure involved in this application is not limited to the technical solutions formed by the specific combination of the foregoing technical features, and should also cover other technical solutions formed by any combination of the foregoing technical features or their equivalent features, for example, the technical solution formed by replacement between the foregoing features and technical features having similar functions disclosed in this application.

## Claims

1. An electrode, wherein
the electrode comprises a current collector and an active material layer located on one side or two sides of the current collector; wherein
along a thickness direction of the active material layer, the active material layer is divided into four portions, each portion is a detection region;
wherein, according to results of a thermogravimetric analysis of the detection region performed at a temperature rise rate of 10°C/min in an inert atmosphere, a weight loss mass percentage of the detection region at 200°C to 800°C gradually increases as a distance between the detection region and the current collector decreases in the thickness direction.

2. The electrode according to claim 1, wherein
according to results of the thermogravimetric analysis of the active material layer performed at a temperature rise rate of 10°C/min in an inert atmosphere, a number of weight loss peaks of the active material layer are greater than or equal to 2 at 200°C to 800°C.

3. The electrode according to claim 2, wherein
a number of weight loss peaks of the active material layer is greater than or equal to 1 at 200°C to 350°C, and a number of weight loss peaks of the active material layer is greater than or equal to 1 at 350°C to 800°C.

4. The electrode according to claim 3, wherein at least one of the following is satisfied:
(a) a weight loss mass percentage of the active material layer is M₁, and 0≤M₁≤2.2% at 200°C to 350°C; or
(b) a weight loss mass percentage of the active material layer is M₂, and 0≤M₂≤13% at 350°C to 800°C.

5. The electrode according to claim 3, wherein at least one of the following is satisfied:
(c) a weight loss mass percentage of the active material layer is M₁, and 0.1<M₁≤1.5% at 200°C to 350°C; or
(d) a weight loss mass percentage of the active material layer is M₂, and 0.15≤M₂≤3.4% at 350°C to 800°C.

6. The electrode according to claim 1, wherein
the electrode is a negative electrode.

7. The electrode according to claim 6, wherein the electrode satisfies at least one of the following:
(e) a compacted density ρ of the active material layer is greater than or equal to 0.6 g/cm³;
(f) a thickness h of the active material layer on one side of the current collector is greater than or equal to 13 µm;
(g) a porosity n of the active material layer satisfies 35%≥n≥30%; or
(h) the active material layer comprises a negative electrode material, the negative electrode material comprising at least one of silicon oxide, lithium titanate, graphite, silicon, or hard carbon.

8. The electrode according to claim 6, wherein the electrode satisfies at least one of the following:
(i) a compacted density ρ of the active material layer satisfies 1.85 g/cm³≥ρ≥0.75 g/cm³; or
(j) a thickness h of the active material layer on one side of the current collector satisfies 1500 µm≥h≥13 µm.

9. The electrode according to claim 6, wherein the electrode satisfies at least one of the following:
(k) a compacted density ρ of the active material layer satisfies 1.83 g/cm³≥ρ≥1.0 g/cm³; or
(l) a thickness h of the active material layer on one side of the current collector satisfies 150 µm≥h≥40 µm.

10. The electrode according to claim 1, wherein the active material layer comprises a conductive agent and satisfies at least one of the following:
(m) based on a total mass of the active material layer, a mass percentage of the conductive agent in the active material layer is 0% to 2%;
(n) a mass percentage of the conductive agent in each region of the active material layer gradually increases as a distance between each region and the current collector increases in the thickness direction; or
(o) the conductive agent comprises at least one of carbon nanotubes, carbon fiber, acetylene black, graphene, Ketjen black, or conductive carbon black.

11. The electrode according to claim 1, wherein the active material layer comprises a polymer compound and satisfies at least one of the following:
(p) the polymer compound comprises at least one of polyethylene oxide, polypropylene oxide, polyvinylidene fluoride, polytetrafluoroethylene, polyacrylonitrile, polyimide, polysiloxane, polyacrylic acid, polypropylene derivatives, sodium carboxymethyl cellulose, lithium carboxymethyl cellulose, polymethylpyrrolidone, polyvinylpyrrolidone, styrene acrylate, or styrene-butadiene rubber; or
(q) based on a total mass of the active material layer, a mass percentage of the polymer compound in the active material layer is 1.0% to 15.8%.

12. The electrode according to claim 1, wherein the active material layer comprises a polymer compound, wherein based on a total mass of the active material layer, a mass percentage of the polymer compound in the active material layer is 1.6% to 7%.

13. A method for preparing the electrode according to any one of claims 1 to 12, the comprising:
applying an active material layer slurry on at least one surface of a current collector, followed by drying and cold pressing to obtain an initial electrode; and
carrying out a treatment on the initial electrode to obtain the electrode; wherein
the carrying out the treatment on the initial electrode comprises the following steps:
carrying out a plasma treatment on the initial electrode in a vacuum environment, wherein a gas source comprises at least one of nitrogen, argon, or carbon tetrafluoride, a gas flow rate is 3000 sccm to 5000 sccm, a temperature is 20°C to 60°C, a plasma power is 3 kW to 5 kW, and a treatment time is 1 min to 1.2 min, or the plasma power is 0.5 kW to 3 kW, and the treatment time is 1 min to 1.2 min; or
carrying out a thermal treatment on the initial electrode in a vacuum or inert gas environment, wherein a thermal treatment temperature is higher than 200°C, and a thermal treatment time is 5 min to 15 min; or
carrying out a laser bombardment on the initial electrode in a vacuum or inert gas environment, wherein a laser intensity is 30 W to 100 W, and a treatment time is 0.3s to 0.5s.

14. The method of preparing electrode according to claim 13, wherein the carrying out treatment on the initial electrode comprises:
carrying out thermal treatment on the initial electrode in a vacuum or inert gas environment, wherein a thermal treatment temperature is 350°C to 400°C, and a thermal treatment time is 10 min to 15 min; or the thermal treatment temperature is 400°C to 500°C, and the thermal treatment time is 5 min to 10 min; or
carrying out laser bombardment on the initial electrode in a vacuum or inert gas environment, wherein a laser intensity is 30 W to 70 W, and a treatment time is 0.5s; or the laser intensity is 70 W to 100 W, and the treatment time is 0.3s.

15. An electrochemical apparatus, comprising an electrode, wherein
the electrode is the electrode according to any one of claims 1 to 12; or
the electrode is an electrode prepared using the preparation method according to claim 13 or 14.

16. An electronic apparatus, comprising the electrochemical apparatus according to claim 15.
